# EUROPÄISCHE PATENTSCHRIFT

(11) **EP 3 363 064 B1**
(45) Veröffentlichungstag und Bekanntmachung des Hinweises auf die Patenterteilung: **19.08.2020**
(21) Anmeldenummer: 16790876.3
(22) Anmeldetag: 14.10.2016
(51) Int. Cl.: H01M 2/30

(54) **BATTERIEPOL UND ELEKTRISCHE KONTAKTEINHEIT ZUR HERSTELLUNG EINER ELEKTRISCHEN VERBINDUNG ZWISCHEN EINEM BATTERIEPOL UND EINEM BORDNETZ EINES FAHRZEUGS**
BATTERY POLE AND ELECTRICAL CONTACT UNIT FOR ESTABLISHING AN ELECTRICAL CONNECTION BETWEEN A BATTERY POLE AND A VEHICLE'S ELECTRICAL SYSTEM
PÔLE DE BATTERIE ET UNITÉ DE CONTACT ÉLECTRIQUE POUR ÉTABLIR UNE CONNEXION ÉLECTRIQUE ENTRE UN PÔLE DE BATTERIE ET LE SYSTÈME ÉLECTRIQUE D'UN VÉHICULE

(30) Priorität: 17.10.2015 DE 102015013472
(43) Veröffentlichungstag der Anmeldung: 22.08.2018
(73) Patentinhaber: Daimler AG, 70372 Stuttgart (DE)
(72) Erfinder: SCHUMACHER, Eric, 55411 Bingen (DE)
(74) Vertreter: Moore, David Simon
(86) Internationale Anmeldenummer: PCT/EP2016/001705
(87) Internationale Veröffentlichungsnummer: WO 2017/063745

(56) Entgegenhaltungen:
- DE-A1- 10 221 057
- DE-A1-102013 005 962
- DE-U1-202010 016 520

## Beschreibung

Die Erfindung betrifft eine elektrische Kontakteinheit zur Herstellung einer elektrischen Verbindung zwischen einer Batterie und einem Bordnetz eines Fahrzeugs und eine Polkappe für eine Batterie sowie einer Klemme für den Anschluss auf der Polkappe.

Aus dem Stand der Technik ist, wie in DE 10 2013 005 962 A1 beschrieben, eine Batterieanschlussklemme zur Festlegung eines Stromkabels am Pol eines Akkumulators oder dgl. bekannt. Die Batterieanschlussklemme weist einen im Wesentlichen zylindrischen oder konischen Klemmabschnitt auf, mit dem die Batterieanschlussklemme auf den zylindrischen oder konischen Pol des Akkumulators oder dgl. in Aufsteckrichtung aufgesteckt wird. Weiterhin weist die Batterieanschlussklemme einen an dem Klemmabschnitt festgelegten Befestigungsabschnitt für das Stromkabel auf, wobei der Klemmabschnitt aus zwei sich gegenüberliegend angeordneten, laschenartig zueinander gebogenen und zur Form des Pols des Akkumulators passenden Klemmbügeln gebildet ist, die den Pol des Akkumulators beidseitig abschnittsweise umgreifen und die sich gegenüberliegenden Enden der laschenartig gebogenen Klemmbügel einen Spalt zwischen sich bilden.

Weiterhin ist in der DE 20 2010 016 520 U1 eine Batterieklemme zur Herstellung eines elektrischen Kontakts zu einem Pol einer Batterie offenbart. Die Batterieklemme weist eine Innenschelle zur Herstellung des elektrischen Kontakts zu dem Pol der Batterie und eine Außenschelle zur Befestigung der Innenschelle an dem Pol sowie zur mechanischen Stabilisierung der Innenschelle auf. Die Innenschelle ist dabei zur Stromübertragung ausgeführt und die Außenschelle ist zur Aufnahme bzw. Positionierung einer Befestigungsschraube und zur Stabilisierung, Klemmung oder Fixierung der Innenschelle ausgeführt.

Der Erfindung liegt die Aufgabe zu Grunde, gegenüber dem Stand der Technik eine verbesserte elektrische Kontakteinheit zur Herstellung einer elektrischen Verbindung zwischen einer Batterie und einem Bordnetz eines Fahrzeugs auf Grundlage einer verbesserten Polkappe bzw. einer verbesserten Batterie und einer verbesserten Klemme anzugeben.

Die Aufgabe wird erfindungsgemäß durch eine Polkappe gemäß Anspruch 1 und eine Batterie gemäß Anspruch 4, sowie durch eine Klemme gemäß Anspruch 5 und eine elektrische Kontakteinheit gemäß Anspruch 9 gelöst.

Vorteilhafte Ausgestaltungen der Erfindung sind Gegenstand der Unteransprüche.

Eine elektrische Kontakteinheit zur Herstellung einer elektrischen Verbindung zwischen einer Batterie und einem Bordnetz eines Fahrzeugs umfasst eine auf dem Pol einer Batterie anordenbare Polkappe zur Bereitstellung einer batterieseitigen Kontaktfläche, die mit einer bordnetzseitigen Kontaktfläche in Form einer Klemme verbindbar ist.

Die erfindungsgemäße Polkappe zeichnet sich dadurch aus, dass sie in einem Abschnitt, der zur Kontaktierung mit der bordnetzseitigen Klemme dient, als hülsenförmiger Konus ausgestaltet ist, welcher einen sich in Richtung der Befestigung am Batteriepol konisch verbreiternden Außenumfang und einen sich in gleicher Richtung konisch verjüngenden Innenumfang aufweist. Aufgrund der Hülsenförmigkeit dieses Kontaktierungsabschnitts der Polkappe wird die außenumfangseitige Kontaktfläche um die innenumfangseitige Kontaktfläche vergrößert. Durch die so vergrößerte Fläche zur elektrischen Kontaktierung wird die Funktionalität der Kontaktierung verbessert. Die erfindungsgemäße Polkappe ermöglicht eine gegenüber bekannten Polkappen vergrößerte Kontaktfläche zur Übertragung höherer Ströme, so dass eine elektrische Verbindung zwischen der Batterie, welche insbesondere eine Starterbatterie ist, und dem Bordnetz des Fahrzeugs gegenüber dem Stand der Technik verbessert ist.

Um die Polkappe - als batterieseitiges Kontaktelement - mit einer bordnetzseitigen Klemme, die bordnetzseitig eine Kontaktfläche bereitstellt, verbinden zu können, wird vorteilhaft - zentral unterhalb des hülsenförmigen Abschnitts der Polkappe - ein Befestigungsabschnitt mit einer Aussparung vorgesehen. Dadurch, dass das bordnetzseitige Kontaktelement zentral unterhalb des hülsenförmigen Abschnitts in der Aussparung verankerbar ist, kann eine besonders gute und haltbare Kontaktierung hergestellt werden, da sich auf diese Weise das batterieseitige und das bordnetzseitige Kontaktelement effektiv zueinander in Anlage bringen lassen. Dabei sind verschiedene Arten der Verankerung des bordnetzseitigen Kontakts in der Aussparung denkbar: beispielsweise durch ein selbstschneidendes Gewinde oder Verspreizen.

Ist die zentrale Aussparung im Befestigungsabschnitt mit einem Innengewinde versehen, kann das bordnetzseitige Kontaktelement besonders einfach, sicher und wiederholt zuverlässig mittels einer Schraube mit der Polkappe verbunden werden.

Die erfindungsgemäße Batterie, weist mindestens eine erfindungsgemäße Polkappe auf. Damit zeigt die erfindungsgemäße Batterie zwangsläufig alle Eigenschaften und Vorteile der erfindungsgemäßen Polkappe bezüglich einer verbesserten Kontaktierung mit dem Bordnetz.

Die Klemme zur Bereitstellung einer bordnetzseitigen Kontaktfläche zur Verbindung mit einem Batteriepol, der mit einer Polkappe, wie sie oben beschrieben wurde, als batterieseitiger Kontaktfläche ausgestattet ist, ist erfindungsgemäß als doppelwandige Klemmhülse mit einer inneren und einer äußeren Wandung, die von einem ringförmigen Kragen gehalten sind, gestaltet, wobei die Wandungen zum Kragen hin einen sich verjüngenden ringförmigen Spalt zur formschlüssigen Aufnahme des hülsenförmigen Abschnitts der oben beschriebenen Polkappe bilden.

Aufgrund der Hülsenförmigkeit der Klemme wird auch bordnetzseitig eine größere Fläche zur elektrischen Kontaktierung bereitgestellt, so dass die vergrößerte Kontaktfläche auf Seiten des hülsenförmigen Abschnitts der Polkappe bei einer Kontaktierung optimal ausgenutzt werden kann. Somit ermöglicht auch die erfindungsgemäße Klemme eine gegenüber dem Stand der Technik verbesserte elektrische Verbindung, insbesondere zur Übertragung höherer Ströme, zwischen einer Batterie und dem Bordnetz eines Fahrzeugs.

Eine besonders gute Kontaktierung wird ermöglicht, wenn die äußere Wandung der bordnetzseitigen Kontaktfläche in Form der Klemme passgenau zum Außenumfang der Polkappe und die innere Wandung passgenau zum Innenumfang der Polkappe ausgebildet ist. Diese Ausgestaltung gewährleistet die dichteste Verbindung zwischen batterie- und bordnetzseitigem Kontaktelement und damit die beste Funktionalität hinsichtlich des Stromflusses.

Eine besonders vorteilhafte Form der Verbindung der Klemme mit der Polkappe wird erreicht, wenn die Klemme mittels einer zentral angeordneten Befestigungsschraube in der - mit einem Innengewinde ausgestatteten Aussparung - des Befestigungsabschnitts der oben näher beschriebenen Polkappe kraftschlüssig verbindbar ist. Ist auch die batterieseitige Aussparung zentral zum hülsenförmigen Kontaktierungsabschnitt angeordnet, so werden bei der Verschraubung von Klemme und Pol die jeweiligen Kontaktflächen gleichmäßig gegeneinander gedrückt, was der Haltbarkeit und Wiederholbarkeit der Verbindung dient.

Eine weitere vorteilhafte Ausgestaltung der Schraubverbindung ist es, wenn der ringförmige Kragen der Klemmhülse an seiner oberen Innenseite einen ringförmigen Anschlag aufweist, mit dem die Klemme bei einer Befestigung auf der Polkappe durch einen Bund der Befestigungsschraube gegen den hülsenförmigen Kontaktierungsabschnitt der Polkappe gedrückt wird. Des Weiteren sorgt die Fläche, in der Bund und Anschlag bei der Verschraubung miteinander in Anlage kommen, für zusätzliche Reibung und damit für eine festere Verbindung.

Die erfindungsgemäße elektrische Kontakteinheit zur Herstellung einer elektrischen Verbindung zwischen einer Batterie und dem Bordnetz eines Fahrzeugs wird mithilfe einer einer erfindungsgemäßen Batterie mit einer erfindungsgemäßen Polkappe als batterieseitige Kontaktfläche und einer erfindungsgemäßen Klemme als bordnetzseitiger Kontaktfläche erzeugt, indem Polkappe und Klemme wie oben beschrieben, miteinander verbunden werden. Die erfindungsgemäße elektrische Kontakteinheit weist damit alle Eigenschaften und Vorteile auf, die weiter oben bezüglich der Polkappe und der Klemme beschrieben wurden.

Die Ausführungsbeispiele der Erfindung werden im Folgenden anhand von Zeichnungen näher erläutert.

Dabei zeigen:
- Fig. 1: schematisch eine perspektivische Darstellung einer batterieseitigen Kontaktfläche mit einer Polkappe,
- Fig. 2: schematisch eine Schnittdarstellung der batterieseitigen Kontaktfläche gemäß Figur 1,
- Fig. 3: schematisch eine perspektivische Darstellung einer Kontaktschelle,
- Fig. 4: schematisch eine perspektivische Darstellung einer Klemmhülse,
- Fig. 5: schematisch eine Schnittdarstellung der Klemmhülse gemäß Figur 4,
- Fig. 6: schematisch eine perspektivische Darstellung eines Deckelements,
- Fig. 7: schematisch eine Schnittdarstellung des Deckelements gemäß Figur 6,
- Fig. 8: schematisch eine perspektivische Darstellung einer Befestigungsschraube,
- Fig. 9: schematisch eine perspektivische Darstellung einer aus der Kontaktschelle, der Klemmhülse, der Befestigungsschraube und dem Deckelelement gebildeten bordnetzseitigen Kontaktfläche,
- Fig. 10: schematisch eine Schnittdarstellung der bordnetzseitigen Kontaktfläche,
- Fig. 11: schematisch eine Schnittdarstellung eines erfindungsgemäßen Ausführungsbeispiels einer aus der bordnetzseitigen Kontaktfläche und der batterieseitigen Kontaktfläche gebildeten elektrischen Kontakteinheit,
- Fig. 12: schematisch eine perspektivische Darstellung der bordnetzseitigen Kontaktfläche und der batterieseitigen Kontaktfläche in einem Montageschritt zur Herstellung einer Schraubverbindung,
- Fig. 13: schematisch eine perspektivische Darstellung der bordnetzseitigen Kontaktfläche und der batterieseitigen Kontaktfläche in einem Demontageschritt zur Lösung der Schraubverbindung, und
- Fig. 14: schematisch eine perspektivische Darstellung der bordnetzseitigen Kontaktfläche und der batterieseitigen Kontaktfläche nach dem Montageschritt gemäß Figur 13.

Einander entsprechende Teile sind in allen Figuren mit den gleichen Bezugszeichen versehen.

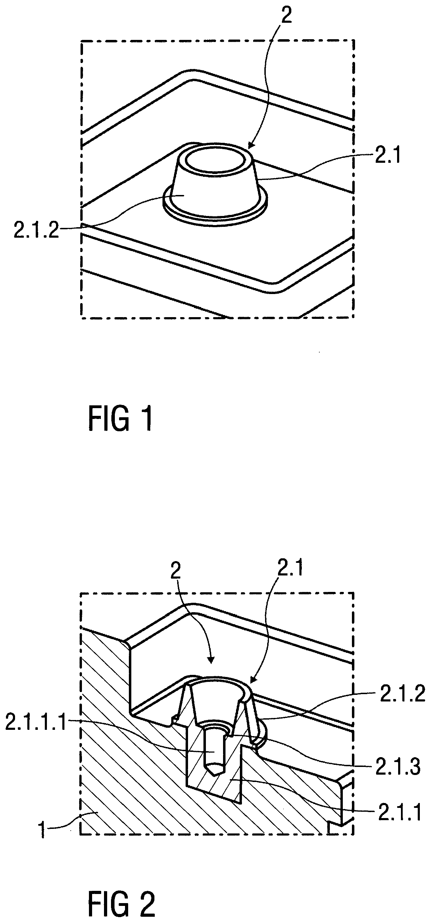

Die Figuren 1 und 2 zeigen jeweils schematisch eine mit einem Batteriepol 1 verbundene Polkappe 2.1, die eine batterieseitige Kontaktfläche 2 zur Herstellung einer elektrischen Verbindung zwischen dem Batteriepol 1 und einem nicht näher dargestellten Bordnetz eines Fahrzeugs bereitstellt. Dabei zeigen Figur 1 die Polkappe 2.1 perspektivisch und Figur 2 in einer Schnittdarstellung, insbesondere in einem Längsschnitt.

Der Batteriepol 1 ist beispielsweise ein elektrischer Pol einer nicht näher dargestellten Starterbatterie eines Fahrzeugs, die einer Antriebseinheit sowie weiteren in das Bordnetz eingebundener Fahrzeugkomponenten elektrische Energie zur Verfügung stellt.

Die Polkappe 2.1 ist mit dem Batteriepol 1 elektrisch leitend verbunden und zweckmäßigerweise aus einem elektrisch leitfähigen Material, z. B. Metall, ausgebildet. Die Polkappe 2.1 weist einen dem Batteriepol 1 zugewandten Befestigungsabschnitt 2.1.1 und einen vom Batteriepol 1 abgewandten hülsenförmigen Kontaktierungsabschnitt 2.1.2 auf.

Der Befestigungsabschnitt 2.1.1 ist mit einer sich in axiale Richtung erstreckenden polkappenseitigen Aussparung 2.1.1.1 versehen, in die bspw. ein nicht näher dargestelltes Gewinde, z. B. ein Innengewinde, eingebracht ist oder welche eine nicht profilierte Fläche zur Herstellung einer Profilverbindung mit einem selbstfurchenden Gewinde bereitstellt. Ein dem Batteriepol 1 zugewandtes Ende der polkappenseitigen Aussparung 2.1.1.1 ist vorliegende spitz zulaufend ausgebildet.

Der hülsenförmige Kontaktierungsabschnitt 2.1.2 ist - von oben gesehen - durch einen sich in Richtung des Batteriepols 1 konisch verbreiternden Außenumfang und einen sich in Richtung des Batteriepols 1 konisch verjüngenden Innenumfang gebildet, wodurch die batterieseitige Kontaktfläche 2 gegenüber dem Stand der Technik vergrößert ist und höhere Ströme übertragen werden können.

Eine durch die hülsenartige Ausformung des Kontaktierungsabschnitts 2.1.2 gebildete Durchgangsöffnung ist im Durchmesser gegenüber der polkappenseitigen Aussparung 2.1.1.1 vergrößert, so dass im Übergangsbereich zwischen dem Befestigungsabschnitt 2.1.1 und dem hülsenförmigen Abschnitt 2.1.2 polkappenseitig ein Anschlag 2.1.3 gebildet ist, welcher sich in Umfangsrichtung erstreckt und gemäß dem gezeigten Ausführungsbeispiel eine ringförmige Anschlagsfläche bildet, worauf später noch näher eingegangen wird.

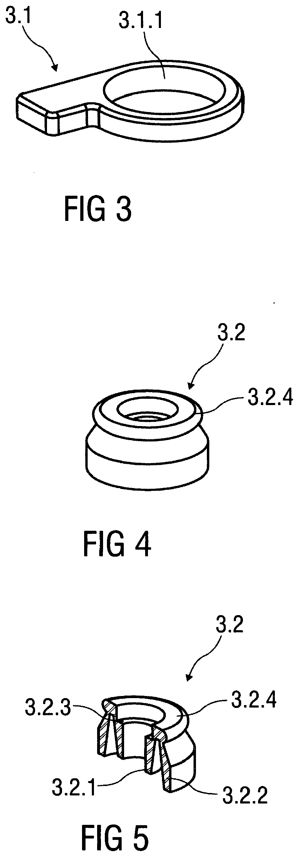

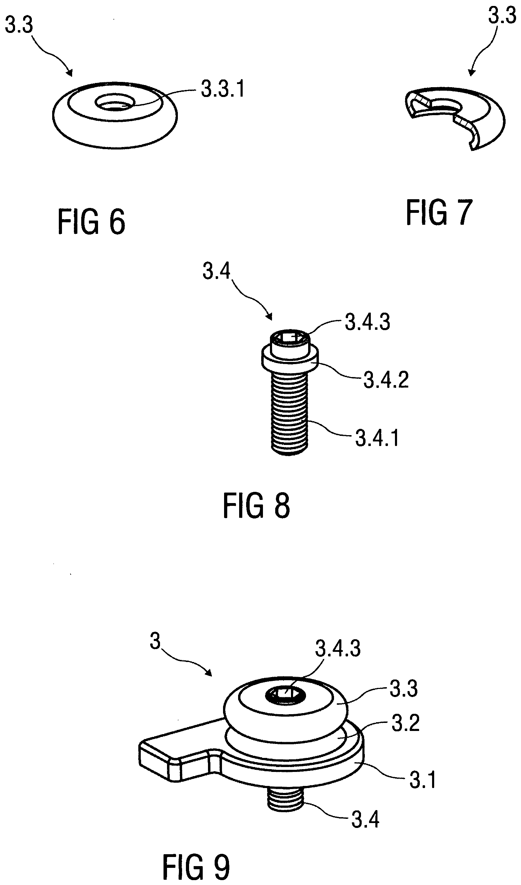

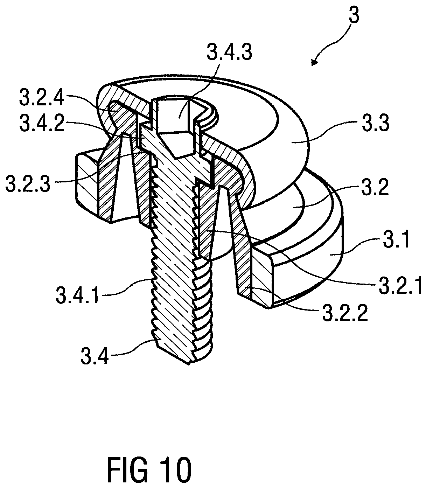

In den Figuren 3 bis 8 sind Komponenten einer bordnetzseitigen Kontaktfläche dargestellt, die im Folgenden einzeln beschrieben werden. Daran anschließend, wird die bordnetzseitige Kontaktfläche, die durch eine Klemme 3 realisiert wird, welche in den Figuren 9 und 10 gezeigt ist, im Zusammenhang mit den zuvor beschriebenen Komponenten näher erläutert.

Figur 3 zeigt eine Kontaktschelle 3.1 in perspektivischer Ansicht.

Die ringörmige Kontaktschelle 3.1 weist eine Aussparung 3.1.1 auf. Zur Herstellung einer elektrischen Verbindung zwischen dem Batteriepol 1 und dem Bordnetz ist die Kontaktschelle 3.1 mit mindestens einem nicht dargestellten Verbindungselement des Bordnetzes elektrisch leitend verbunden. Zweckmäßigerweise ist die Kontaktschelle 3.1 dabei aus einem elektrisch leitfähigen Material, z. B. Metall, gebildet.

Die Figuren 4 und 5 zeigen jeweils eine Klemmhülse 3.2, wobei die Klemmhülse 3.2 in Figur 4 perspektivisch und in Figur 5 in einer Schnittdarstellung, insbesondere in einem Längsschnitt, dargestellt ist.

Die Klemmhülse 3.2 ist doppelwandig mit einer inneren Wandung 3.2.1 und einer äußeren Wandung 3.2.2 ausgebildet, die an ihrem oberen Ende in einem ringförmigen Kragen 3.2.4 münden. Zwischen den Wandungen ist ein Spalt zur formschlüssigen Aufnahme des hülsenförmigen Kontaktierungsabschnitts 2.1.2 der Polkappe 2.1 ausgebildet. Die Klemmhülse 3.2.4 ist vorliegend einteilig ausgebildet.

Bei der dargestellten Ausführungsform weist der Außenumfang der äußeren Wandung 3.2.2 - von oben gesehen - einen sich konisch oder kegelförmig verbreiternden Abschnitt und daran anschließend einen gleichbleibend bzw. zylindrisch verlaufenden Abschnitt auf, wobei letzterer der Polkappe 2.1 zugewandt ist. Der Innenumfang der äußeren Wandung 3.2.2 ist korrespondierend bzw. passgenau zum Außenumfang des hülsenförmigen Kontaktierungsabschnitts 2.1.2 ausgebildet und verläuft somit in Richtung der Polkappe 2.1 sich konisch verbreiternd.

Bezüglich der inneren Wandung 3.2.1 wird im Weiteren der vom Zentrum der rotationssymmetrischen Klemmhülse 3.2 entferntere Radius als "Außenumfang" bezeichnet und der dem Zentrum näher gelegene Radius als "Innenumfang".

Ein Außenumfang der inneren Wandung 3.2.1 ist korrespondierend bzw. passgenau zum Innenumfang der Polkappe 2.1 ausgebildet und verläuft - in Richtung der Polkappe 2.1 gesehen - sich konisch verjüngend. Der Innenumfang der inneren Wandung 3.2.1 ist vorliegend zylindrisch.

Des Weiteren ist im Inneren des ringförmigen Kragens 3.2.4 am Übergang zur inneren Wandung 3.2.1 klemmhülsenseitig ein Anschlag 3.2.3 gebildet, der gemäß dem gezeigten Ausführungsbeispiel eine ringförmige Anschlagsfläche für eine Schraubverbindung oder dergleichen bildet.

Darüber hinaus ist an einem der Polkappe 2.1 abgewandten Ende der Klemmhülse 3.2 ein Kragen 3.2.4 zur Herstellung einer Bördelverbindung mit einem in den Figuren 6 und 7 gezeigten Deckelement 3.3 ausgebildet.

Die Figuren 6 und 7 zeigen das Deckelelement 3.3, welches als gebördelter Deckel zur Herstellung der zuvor erwähnten Bördelverbindung ausgebildet ist und welcher eine deckelseitige Aussparung 3.3.1 zur Aufnahme einer in Figur 8 gezeigten Befestigungsschraube 3.4 aufweist.

Figur 8 zeigt die Befestigungsschraube 3.4 in einer perspektivischen Darstellung.

Die Befestigungsschraube 3.4 ist mit einem Außengewinde 3.4.1 versehen, welches im zusammengesetzten Zustand der elektrischen Kontakteinheit E in Wirkeingriff mit dem Gewinde in der polkappenseitigen Aussparung 2.1.1.1 steht.

An einem der Polkappe 2.1 abgewandten Endbereich der Befestigungsschraube 3.4 - wiederum gesehen in Bezug auf die Befestigung an der Polkappe - ist ein einen Durchmesser der Befestigungsschraube 3.4 vergrößernder Bund 3.4.2 ausgebildet. Des Weiteren ist die Befestigungsschraube 3.4 gemäß dem gezeigten Ausführungsbeispiel mit einem Innensechskant-Mitnahmeprofil 3.4.3 für eine einfache Montage und Demontage der elektrischen Kontakteinheit E ausgebildet, wie es später näher beschrieben wird.

Die zuvor beschriebenen Komponenten bilden im zusammengesetzten Zustand die bordnetzseitige Klemme 3, wie sie die Figuren 9 und 10 beispielhaft zeigen.

Die bordnetzseitige Klemme 3 ist dabei im zusammengesetzten Zustand in Figur 9 in einer perspektivischen Darstellung und in Figur 10 in einer Schnittdarstellung, insbesondere in einem Längsschnitt dargestellt.

Die Komponenten sind dabei in folgender Art und Weise miteinander verbunden:
Die ringförmige Kontaktschelle 3.1 umgreift mit ihrer Aussparung 3.1.1 den gleichmäßig bzw. zylindrisch verlaufenden Abschnitt des Außenumfangs der äußeren Wandung 3.2.2 der Klemmhülse 3.2, so dass diese formschlüssig und elektrisch leitend miteinander verbunden sind, wobei die ringförmige Aussparung 3.1.1 der Kontaktschelle 3.1 - beispielsweise mittels einer nicht gezeigten Schraube - verengt wird und die Klemmhülse 3.2 einklemmt, so dass sich eine kraftschlüssige Verbindung zwischen der Kontaktschelle 3.1 und der Klemmhülse 3.2 bildet. Der Kontakt zwischen Klemmhülse 3.2 und Kontaktschelle 3.1 kann ebenso durch Verpressen, Verschweißen oder Verlöten hergestellt werden.

Die Befestigungsschraube 3.4 ist durch die deckelseitige Aussparung 3.3.1 und durch die Klemmhülse 3.2 hindurch angeordnet, wobei ein das Außengewinde 3.4.1 umfassender Bereich der Befestigungsschraube 3.4 abschnittsweise aus der Klemmhülse 3.2 herausragt und ein das Innensechskant-Mitnahmeprofil 3.4.3 umfassendes Ende der Befestigungsschraube 3.4 mit dem Deckelelement 3.3 abschließt. Der Bund 3.4.2 der Befestigungsschraube 3.4 liegt auf dem klemmhülsenseitigen Anschlag 3.2.3 auf.

Zur Fixierung der Befestigungsschraube 3.4 innerhalb der bordnetzseitigen Klemme 3 wird das Deckelelement 3.3 kraftschlüssig mit der Klemmhülse 3.2 verbunden, indem ein gebördelter Rand des Deckelelements 3.3 den Kragen 3.2.4 umschließend auf der Klemmhülse 3.2 angeordnet wird. Nach Anordnung des Deckelelements 3.3 kann die Befestigungsschraube 3.4 aufgrund des durchmesservergrößernden Bunds 3.4.2 nicht durch die deckelseitige Aussparung 3.3.1 hindurch bewegt werden, so dass die Befestigungsschraube 3.4 in der bordnetzseitigen Klemme 3 verliersicher, jedoch gegenüber Klemmhülse und Deckelement drehbar, fixiert ist. Da das Deckelelement 3.3 zusätzlich kraftschlüssig mit der Klemmhülse 3.2 und diese wiederum kraftschlüssig mit der Kontaktschelle 3.1 verbunden ist, kann die bordnetzseitige Klemme 3 als eine bauliche Einheit mit der batterieseitigen Kontaktfläche 2 verbunden werden.

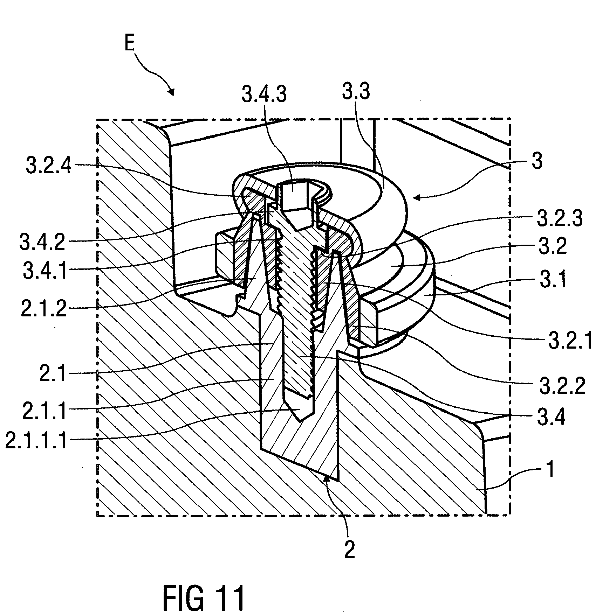

Figur 11 zeigt eine durch Verbindung der bordnetzseitigen Kontaktfläche mit der batterieseitigen Kontaktfläche 2 gebildete elektrische Kontakteinheit E.

Die bordnetzseitige Klemme 3 wird durch Verschrauben mit dem batterieseitigen hülsenförmigen Kontaktierungsabschnitt 2.1.2 kraftschlüssig verbunden. Dabei greift ein Abschnitt des Außengewindes 3.4.1 der Befestigungsschraube 3.4 in das Gewinde der polkappenseitigen Aussparung 2.1.1.1 ein. Der hülsenförmige Kontaktierungsabschnitt 2.1.2 der Polkappe 2.1 wird formschlüssig vom Spalt zwischen der inneren Wandung 3.2.1 und der äußeren Wandung 3.2.2 aufgenommen.

Dadurch, dass der Innenumfang der inneren Wandung 3.2.1 in Richtung der Polkappe 2.1 sich konisch verjüngend verläuft, kann bei einer bestimmten Krafteinwirkung durch die Befestigungsschraube 3.4 beim Herstellen der Schraubverbindung zwischen der bordnetzseitigen Klemme 3 und der batterieseitigen Kontaktfläche 2 die innere Wandung 3.2.1 radial nach außen gedrückt werden, wodurch zwischen der Polkappe 2.1 und der Klemmhülse 3.2 zusätzlich eine Klemmverbindung hergestellt wird.

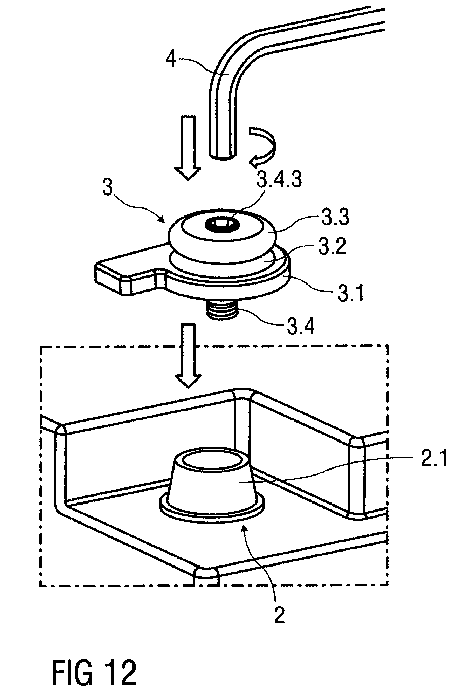

Figur 12 zeigt einen Montageschritt vor dem Zusammenbau der elektrischen Kontakteinheit E, wobei mittels eines axialen Pfeils eine Richtung für die bordnetzseitige Klemme 3 vorgegeben wird, in welcher dieses in Richtung der Polkappe 2 bewegt und zur Montage auf dieser angeordnet wird. Ein weiterer axialer Pfeil gibt eine Bewegungsrichtung eines Innensechskantschlüssels 4 zur Einführung in das Innensechskant-Mitnahmeprofil 3.4.3 der Befestigungsschraube 3.4 vor. Ein gebogener Pfeil gibt eine Rotationsrichtung, hierbei im Uhrzeigersinn, für den lnnensechskantschlüssel 4 zur Herstellung der Schraubverbindung zwischen der bordnetzseitigen Kontaktfläche in Form der Klemme 3 und der batterieseitigen Kontaktfläche 2 in Form des hülsenförmigen Kontaktierungsabschnitts 2.1.2 vor.

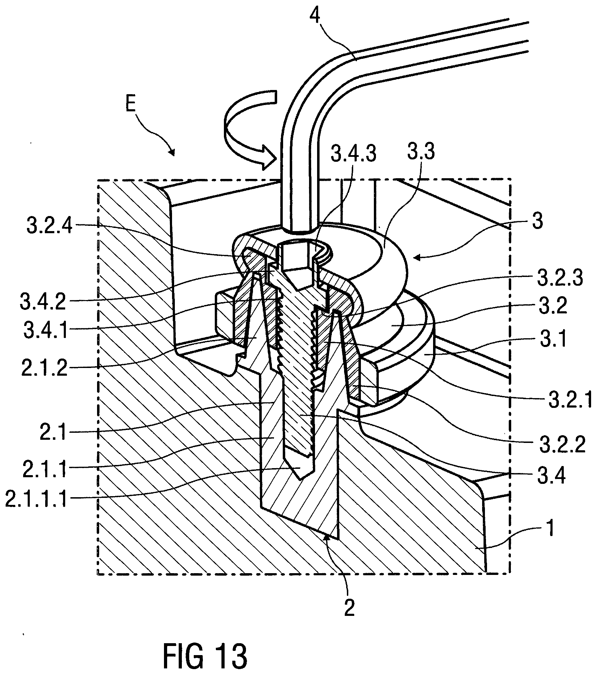

Figur 13 zeigt einen Demontageschritt zur Lösung der Schraubverbindung zwischen der bordnetzseitigen Klemme 3 und dem batterieseitigen Kontaktierungsabschnitt 2.1.2, wobei eine Rotationsrichtung des Innensechskantschlüssels 4 entgegen dem Uhrzeigersinn vorgegeben ist.

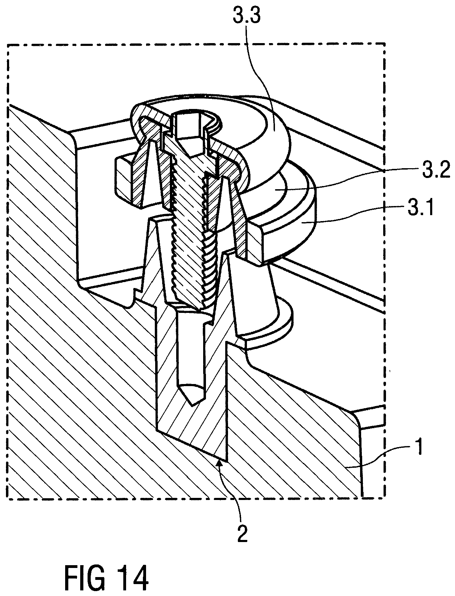

Figur 14 zeigt die bordnetzseitige Klemme 3 und die batterieseitigen Kontaktierungsabschnitt 2.1.2 nach dem in Figur 13 gezeigten Demontageschritt, wobei die Klemme 3 als eine bauliche Einheit von der batterieseitigen Kontaktfläche 2 gelöst wird.

## Patentansprüche

1. Polkappe (2.1) für einen Batteriepol (1) einer Batterie mit einem Kontaktierungsabschnitt (2.1.2), der einen sich in Richtung einer Befestigung am Batteriepol (1) konisch verbreiternden Außenumfang aufweist,
**dadurch gekennzeichnet, dass**
der Kontaktierungsabschnitt (2.1.2) hülsenförmig, mit einem sich in Richtung der Befestigung am Batteriepol (1) konisch verjüngenden Innenumfang ausgebildet ist.

2. Polkappe (2.1) nach Anspruch 1,
**dadurch gekennzeichnet, dass**
die Polkappe (2.1) zentral unterhalb des hülsenförmigen Kontaktierungsabschnitts (2.1.2) einen Befestigungsabschnitt (2.1.1) zur Verbindung mit einer bordnetzseitigen Kontaktfläche (3) mit einer Aussparung (2.1.1.1) aufweist.

3. Polkappe (2.1) nach Anspruch 2,
**dadurch gekennzeichnet, dass**
die Aussparung (2.1.1.1) ein Innengewinde aufweist.

4. Batterie mit mindestens einer Polkappe gemäß den Ansprüchen 1 bis 3.

5. Klemme (3) zur Verbindung mit einem Batteriepol (1), der mit einer Polkappe (2.1) als batterieseitiger Kontaktfläche (2) gemäß den Ansprüchen 1 bis 3 ausgestattet ist,
**dadurch gekennzeichnet, dass**
die Klemme (3) als doppelwandige Klemmhülse (3.2) mit einer inneren Wandung (3.2.1) und einer äußeren Wandung (3.2.2) - beide gehalten von einem ringförmigen Kragen (3.2.4) - gestaltet ist, wobei die Wandungen einen zum Kragen (3.2.4) hin sich verjüngenden ringförmigen Spalt zur formschlüssigen Aufnahme eines hülsenförmigen Kontaktierungsabschnitts (2.1.2) der Polkappe (2.1) bilden.

6. Klemme (3) gemäß Anspruch 5,
**dadurch gekennzeichnet, dass**
die äußere Wandung (3.2.2) der Klemmhülse (3.2) passgenau zum Außenumfang des hülsenförmigen Kontaktierungsabschnitts (2.1.2) der Polkappe (2.1) und die innere Wandung (3.2.1) passgenau zum Innenumfang des hülsenförmigen Kontaktierungsabschnitts der Polkappe (2.1) ausgebildet ist.

7. Klemme (3) gemäß Anspruch 5 oder 6,
**dadurch gekennzeichnet, dass**
die Klemme (3) mit der Polkappe (2.1) mittels einer zentralen Befestigungsschraube (3.4) in einer - mit einem Innengewinde ausgestatteten - Aussparung (2.1.1.1) eines Befestigungsabschnitts (2.1.1) unterhalb des hülsenförmigen Kontaktierungsabschnitts (2.1.2) der Polkappe (2.1) kraftschlüssig verbindbar ist.

8. Klemme (3) gemäß Anspruch 7,
**dadurch gekennzeichnet, dass** der ringförmige Kragen (3.2.4) der Klemmhülse (3.2) an seiner oberen Innenseite einen ringförmigen Anschlag (3.2.3) aufweist, mit dem die Klemme (3) bei einer Verbindung mit der Polkappe (2.1) durch einen Bund (3.4.2) der Befestigungsschraube (3.4) gegen den hülsenförmigen Abschnitt (2.1.2) der Polkappe (2.1) gedrückt wird.

9. Elektrische Kontakteinheit (E) zur Herstellung einer elektrischen Verbindung zwischen einer Batterie und einem Bordnetz eines Fahrzeugs mit einer auf der Batterie angeordneten Polkappe (2.1) gemäß den Ansprüchen 1 bis 3 als batterieseitiger Kontaktfläche (2) und einer Klemme (3) gemäß den Ansprüchen 5 bis 8 als bordnetzseitiger Kontaktfläche.

## Claims

1. Pole cap (2.1) for a battery pole (1) of a battery, with a contacting section (2.1.2) having an outer circumference which widens conically in the direction of a mounting on the battery pole (1),
**characterised in that**
the contacting section (2.1.2) is designed to be sleeve-shaped with an inner circumference which tapers conically in the direction of the mounting on the battery pole (1).

2. Pole cap (2.1) according to claim 1,
**characterised in that**
the pole cap (2.1) has a fastening section (2.1.1) with a recess (2.1.1.1) centrally below the sleeve-shaped contacting section (2.1.2) for connection to an on-board power supply-side contact surface (3).

3. Pole cap (2.1) according to claim 2,
**characterised in that**
the recess (2.1.1.1) has a female thread.

4. Battery having at least one pole cap according to claims 1 to 3.

5. Terminal (3) for connection to a battery pole (1) equipped with a pole cap (2.1) acting as battery-side contact surface (2) according to any of claims 1 to 3,
**characterised in that**
the terminal (3) is designed as a double-walled clamping sleeve (3.2) with an inner wall (3.2.1) and an outer wall (3.2.2) - both held by an annular collar (3.2.4) - wherein the walls form an annular gap tapering towards the collar (3.2.4) for the positive accommodation of a sleeve-shaped contacting section (2.1.2) of the pole cap (2.1).

6. Terminal (3) according to claim 5,
**characterised in that**
the outer wall (3.2.2) of the clamping sleeve (3.2) is designed to fit perfectly to the outer circumference of the sleeve-shaped contacting section (2.1.2) of the pole cap (2.1) and the inner wall (3.2.1) designed to fit perfectly to the inner circumference of the sleeve-shaped contacting section of the pole cap (2.1).

7. Terminal (3) according to claim 5 or 6,
**characterised in that**
the terminal (3) can be non-positively connected to the pole cap (2.1) below the sleeve-shaped contacting section (2.1.2) of the pole cap (2.1) by means of a central fastening screw (3.4) in a recess (2.1.1.1) - provided with a female thread - of a fastening section (2.1.1).

8. Terminal (3) according to claim 7,
**characterised in that**
the annular collar (3.2.4) of the clamping sleeve (3.2) has on its top inside an annular stop (3.2.3), by which the terminal (3), if connected to the pole cap (2.1), is pressed through a collar (3.4.2) of the fastening screw (3.4.) against the sleeve-shaped contacting section (2.1.2) of the pole cap (2.1).

9. Electric contact unit (E) for establishing an electric connection between a battery and an on-board power supply of a vehicle, having a pole cap (2.1) according to any of claims 1 to 3 located on the battery and acting as battery-side contact surface (2) and a terminal (3) according to any of claims 5 to 8 acting as on-board power supply-side contact surface.

## Revendications

1. Capuchon de borne (2.1) pour une borne (1) d'une batterie comprenant une section de mise en contact (2.1.2) dont la circonférence extérieure s'élargissant coniquement dans la direction d'une fixation sur le capuchon de borne (1), **caractérisé en ce que** la section de mise en contact électrique (2.1.2) est conçue en forme de manchon dont la circonférence intérieure se rétrécissant coniquement dans la direction de la fixation sur la borne de batterie (1).

2. Capuchon de borne (2.1) selon la revendication 1, **caractérisé en ce que** le capuchon de borne (2.1) présente au centre en dessous de la section de mise en contact électrique (2.1.2) en forme de manchon une partie de fixation (2.1.1) pour raccorder à une zone de contact (3) côté réseau de bord avec un évidemment (2.1.1.1).

3. Capuchon de borne (2.1) selon la revendication 2, **caractérisé en ce que** l'évidemment (2.1.1.1) présente un filetage intérieur.

4. Batterie comprenant un capuchon de borne selon les revendications 1 à 3.

5. Collier de serrage (3) pour raccorder la borne de batterie (1) qui est dotée d'un capuchon de borne (2.1) sous forme de zone de contact (2) côté batterie selon les revendications 1 à 3, **caractérisé en ce que** le collier de serrage (3) est conçu sous la forme d'anneau de fixation (3.2) à double paroi comprenant une paroi intérieure (3.2.1) et une paroi extérieure (3.2.2) - les deux étant maintenus par une collerette annulaire (3.2.4), les parois formant une fente annulaire se rétrécissant vers la collerette (3.2.4) pour loger par complémentarité de forme une section de mise en contact électrique (2.1.2) en forme de manchon du capuchon de borne (2.1).

6. Collier de serrage (3) selon la revendication 5, **caractérisé en ce que** la paroi extérieure (3.2.2) de l'anneau de fixation (3.2) est conçue par ajustement précis sur la circonférence extérieure de la section de mise en contact électrique en forme de manchon (2.1.2) du capuchon de borne (2.1) et la paroi intérieure (3.2.1) est conçue par ajustement précis sur la circonférence intérieure de la section de mise en contact électrique en forme de manchon du capuchon de borne (2.1) .

7. Collier de serrage (3) selon la revendication 5 ou la revendication 6, **caractérisé en ce que** le collier de serrage (3) avec le capuchon de borne (2.1) peut être raccordé par force au moyen d'une vis de fixation centrale (3.4) dans un évidement (2.1.1.1) doté d'un filetage intérieur d'une section de fixation (2.1.1) en dessous de la section de mise en contact électrique en forme de manchon (2.1.2) du capuchon de borne (2.1).

8. Collier de serrage (3) selon la revendication 7, **caractérisé en ce que** la collerette annulaire (3.2.4) de l'anneau de fixation (3.2) présente sur sa face intérieure supérieure une butée annulaire (3.2.3) avec laquelle le collier de serrage (3) au moment d'un raccordement avec le capuchon de serrage (2.1) par un raccord (3.4.2) de la vis de fixation (3.4) est poussé contre la partie en forme de manchon (2.1.2) du capuchon de borne (2.1).

9. Unité de contact électrique (E) pour fabriquer un raccord électrique entre une batterie et un réseau de bord d'un véhicule dotée d'un capuchon de borne (2.1) disposé sur la batterie selon les revendications 1 à 3 en tant que zone de contact (2) côté batterie et d'un collier de serrage (3) selon les revendications 5 à 8 en tant que zone de contact côté réseau de bord.
